Europäisches Patentamt

European Patent Office

Office européen des brevets

(19)

(11) Veröffentlichungsnummer : **0 114 564 B1**

# (12) EUROPÄISCHE PATENTSCHRIFT

(45) Veröffentlichungstag der Patentschrift :
16.04.86

(21) Anmeldenummer : 83810024.6

(22) Anmeldetag : 21.01.83

(51) Int. Cl.⁴ : **D 01 H 11/00**

(54) Vorrichtung zur Sammlung von Abfällen bei Textilmaschinen.

(43) Veröffentlichungstag der Anmeldung :
01.08.84 Patentblatt 84/31

(45) Bekanntmachung des Hinweises auf die Patenterteilung : 16.04.86 Patentblatt 86/16

(84) Benannte Vertragsstaaten :
CH DE FR GB IT LI

(56) Entgegenhaltungen :
GB-A- 939 203
US-A- 4 180 390

(73) Patentinhaber : GEBRÜDER SULZER AKTIENGE-
SELLSCHAFT
Zürcherstrasse 9
CH-8401 Winterthur (CH)

(72) Erfinder : Simson, Dionizy
Friedenstrasse 18
CH-8400 Winterthur (CH)

## Beschreibung

Die Erfindung betrifft eine Vorrichtung zur Sammlung von Abfällen bei Textilmaschinen mit einem Behälter und einem Zutritt für ein die Abfälle transportierendes Trägermedium.

Eine solche Vorrichtung ist z. B. in der US-PS 4 180 390 offenbart. Dabei wird die Textilabfälle enthaltende Luft mittels eines Gebläses zuerst in eine Kammer geführt, welche eine über einen Siebboden laufende Förderschnecke enthält, wobei die gröberen Abfallpartikel abgeschieden und mittels der Förderschnecke komprimiert werden. Nachher wird die Luft in einer zweiten Kammer mit einem Staubsack einer zusätzlichen Reinigung unterzogen.

Diese bekannte Vorrichtung weist jedoch den Nachteil auf, dass sie verhältnismässig kompliziert ist und einen zusätzlichen motorischen Antrieb für den Verdichtungsvorgang benötigt.

Aufgabe der Erfindung ist es, eine Vorrichtung der eingangs erwähnten Art zu schaffen, welche verhältnismässig einfach ist und für den Verdichtungsvorgang keine zusätzliche mechanischen Antriebselemente benötigt.

Die Lösung dieser Aufgabe ist dadurch gekennzeichnet, dass der Behälter wenigstens eine im Sinne einer Verdichtung der Abfälle wirkende bewegliche Behälterwand, sowie einen Austritt für das Trägermedium aufweist.

Hierdurch lässt sich erreichen, dass die bewegliche Behälterwand durch das die Abfälle transportierende Medium direkt bewegt wird und dabei das Volumen der Abfallmasse begrenzt. Auf eine zusätzliche Verdichtungsanordnung kann somit verzichtet werden.

Gemäss einer besonders vorteilhaften Ausführung der Erfindung kann die bewegliche Behälterwand gegen die Schwerkraft verstellbar angeordnet sein. Hierdurch lässt sich erreichen, dass die bewegliche Behälterwand deckelartig auf der Abfallmasse schwimmt und durch ihr Gewicht bereits eine gewisse Verdichtung der Abfälle bewirkt.

Weiter können Mittel für eine pulsierende Zuführung des Trägermediums vorgesehen sein. Hierdurch lässt sich eine Vibration der beweglichen Behälterwand erzielen, wodurch eine zusätzliche Verdichtung der Abfallmasse mit entsprechender Erhöhung der Aufnahmekapazität bewirkt wird.

Der Austritt kann siebartig ausgebildet sein. Hierdurch lässt sich eine Trennung der Abfälle vom Trägermedium bei geringem Strömungswiderstand erzielen.

Der Behälter kann einen konischen Unterteil aufweisen und der Zutritt sowie der Austritt können in diesem angeordnet sein. Hierdurch wird eine optimale Gleichmässigkeit in der Verteilung der Abfälle über den Behälterquerschnitt erzielt.

Die bewegliche Behälterwand kann ferner kegelartig ausgebildet sein und der Zutritt sowie der Austritt können in dieser vorgesehen sein. Dabei wird der Vorteil erreicht, dass der Behälter selber als einfache zylindrische Trommel ausgebildet sein kann. Wenn der Behälter voll ist, kann er abgeführt und durch einen anderen leeren Behälter ersetzt werden.

Weiter kann sich der Behälter in Bewegungsrichtung der beweglichen Behälterwand erweitern. Hierdurch wird ein Klemmen der beweglichen Behälterwand vermieden und die Entleerung des Behälters erleichtert.

Schliesslich kann die bewegliche Behälterwand eine Führung aufweisen, welche ein Schiefstellen bzw. Klemmen im Behälter verhindert.

Die nähere Erläuterung der Erfindung erfolgt anhand von Ausführungsbeispielen in Verbindung mit nachstehender Zeichnung. Es zeigen :

Figur 1 einen Längsschnitt durch eine erste Ausführungsform der Erfindung und

Figur 2 einen Längsschnitt durch eine zweite Ausführung der Erfindung.

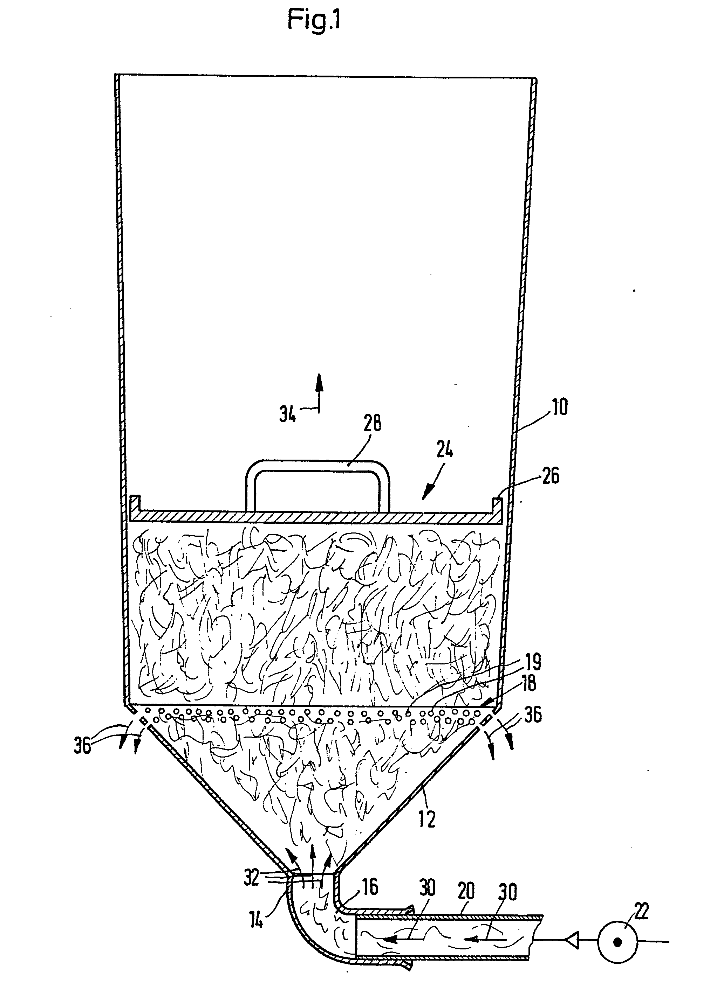

Ein zylindrischer, sich nach oben geringfügig konisch erweiternder Behälter 10 (Fig. 1) weist einen konischen Unterteil 12 mit einem Zutritt 14 für das die Abfälle 16 transportierende Trägermedium, in diesem Fall Luft, sowie einen siebartig, sich in Umfangsrichtung erstreckenden Austritt 18 mit Oeffnungen 19 für das Trägermedium auf. Die mit dem Zutritt verbundene Leitung 20 ist mit einem Absauggebläse 22 (ISO 1219-1976) verbunden, welches z. B. der Fangseite einer Luftdüsen- oder Projektilwebmaschine zugeordnet sein kann. Im Behälter befindet sich ein Deckel 24 mit einem als Führung dienenden Bördelrand 26, sowie einem Handgriff 28.

Beim Betrieb der Vorrichtung werden die Abfälle 16, z. B. Schussfadenabfälle oder Schnittkanten einer Projektil- oder Luftdüsenwebmaschine, mittels des Gebläses 22 gemäss den Pfeilen 30 durch den Zutritt 14 in den konischen Unterteil 12 eingeführt und verteilen sich gemäss den Pfeilen 32 über den Behälterquerschnitt, wobei sich mit steigendem Füllgrad der Deckel 24 gemäss Pfeil 34 nach oben bewegt und die als Trägermedium dienende Luft gemäss den Pfeilen 36 durch die Oeffnung 19 des siebartigen Austritts 18 entweicht. Durch das Gewicht des Deckels 24 werden die Abfälle 16 zu einer kompakten Masse verdichtet.

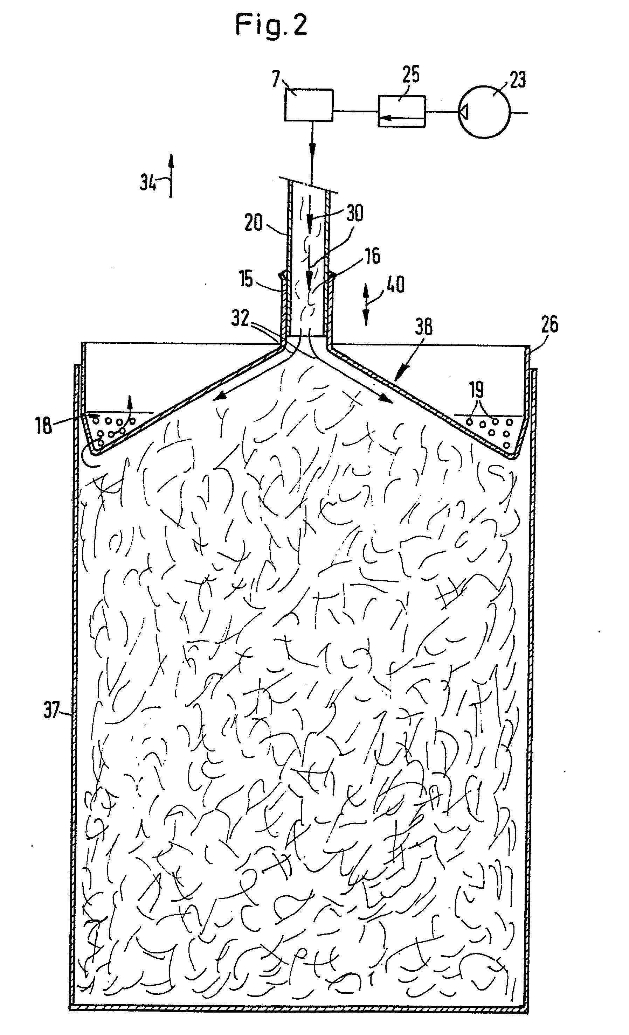

Beim Ausführungsbeispiel nach Fig. 2 ist die im Behälter 37 bewegliche Behälterwand 38 kegelartig ausgebildet und weist einen nach oben gerichteten Zutritt 15 auf. Der siebartige Austritt 18 mit den Oeffnungen 19 erstreckt sich in diesem Falle über den Kegelumfang. Der in diesem Falle flexiblen, zur Webmaschine 27 führenden Leitung 20 ist in an sich bekannter Art ein Kompressor 23 mit einem Ventil 25 zugeordnet.

Beim Betrieb steigt die Behälterwand 38 mitsamt der flexiblen Leitung 20 gemäss Pfeil 34 nach oben. Dabei kann die überlicherweise vorhandene Aus- und Einschaltung des Ventils 25 dazu dienen, der Behälterwand 38 eine Vibration gemäss dem Doppelpfeil 40 zu erteilen. Hierdurch wird eine zusätzliche Stampfwirkung erzielt, welche die Verdichtung der Abfälle begünstigt.

Es versteht sich, dass die bewegliche Behälterwand auch horizontal, z. B. gegen Federdruck, bewegbar angeordnet sein kann. Der Behälter kann auch eckigen Querschnitt aufweisen.

## Patentansprüche

1. Vorrichtung zur Sammlung von Abfällen bei Textilmaschinen mit einem Behälter (10, 37) und einem Zutritt (14, 15) für ein die Abfälle transportierendes Trägermedium, dadurch gekennzeichnet, dass der Behälter wenigstens eine im Sinne einer Verdichtung der Abfälle wirkende bewegliche Behälterwand (24, 38), sowie einen Austritt (18) für das Trägermedium aufweist.

2. Vorrichtung nach Anspruch 1, dadurch gekennzeichnet, dass die bewegliche Behälterwand (24, 38) gegen die Schwerkraft verstellbar angeordnet ist.

3. Vorrichtung nach Anspruch 1, gekennzeichnet durch Mittel (22 ; 23, 25) für eine pulsierende Zuführung des Trägermediums.

4. Vorrichtung nach Anspruch 1, dadurch gekennzeichnet, dass der Austritt (18) siebartig ausgebildet ist.

5. Vorrichtung nach Anspruch 1, dadurch gekennzeichnet, dass der Behälter (10) einen konischen Unterteil (12) aufweist und dass der Zutritt (14) sowie der Austritt (18) in diesem angeordnet sind.

6. Vorrichtung nach Anspruch 1, dadurch gekennzeichnet, dass die bewegliche Behälterwand (38) kegelartig ausgebildet ist und dass der Zutritt (15) sowie der Austritt (18) in dieser vorgesehen sind.

7. Vorrichtung nach Anspruch 1, dadurch gekennzeichnet, dass sich der Behälter (10, 37) in Bewegungsrichtung der beweglichen Behälterwand (24, 38) erweitert.

8. Vorrichtung nach Anspruch 1, dadurch gekennzeichnet, dass die bewegliche Behälterwand (24, 38) eine Führung (26) aufweist.

## Claims

1. Apparatus for collecting waste in textile machines, comprising a container (10, 37) and an inlet (14, 15) for a carrier medium conveying the waste, characterised in that the container comprises at least one movable container wall (24, 38) acting to compress the waste, and an outlet (18) for the carrier medium.

2. Apparatus according to claim 1, characterised in that the movable container wall (24, 38) is disposed for movement against the force of gravity.

3. Apparatus according to claim 1, characterised by means (22 ; 23, 25) for a pulsating supply of the carrier medium.

4. Apparatus according to claim 1, characterised in that the outlet (18) is in the form of a screen.

5. Apparatus according to claim 1, characterised in that the container (10) has a conical bottom portion (12) and the inlet (14) and outlet (18) are disposed therein.

6. Apparatus according to claim 1, characterised in that the movable container wall (38) is conical and the inlet (15) and outlet (18) are disposed therein.

7. Apparatus according to claim 1, characterised in that the container (10, 37) widens out in the direction of movement of the movable container wall (24, 38).

8. Apparatus according to claim 1, characterised in that the movable container wall (24, 38) has a guide (26).

## Revendications

1. Dispositif pour amasser des déchets issus de machines textiles comportant un récipient (10, 37) et une arrivée (14, 15) destinés à un milieu porteur transportant les déchets, caractérisé en ce que le récipient présente au moins une paroi de récipient (24, 38) mobile agissant dans le sens d'une densification des déchets, ainsi qu'une sortie (18) destinée au milieu porteur.

2. Dispositif selon la revendication 1, caractérisé en ce que la paroi mobile de récipient (24, 38) est disposée de manière à pouvoir se déplacer à l'encontre de la force de la pesanteur.

3. Dispositif selon la revendication 1, caractérisé par des moyens (22 ; 23, 25) pour une arrivée pulsatoire du milieu porteur.

4. Dispositif selon la revendication 1, caractérisé en ce que la sortie (18) est conformée comme un tamis.

5. Dispositif selon la revendication 1, caractérisé en ce que le récipient (10) présente une partie inférieure conique (12) et en ce que l'arrivée (14) ainsi que la sortie (18) y sont disposées.

6. Dispositif selon la revendication 1, caractérisé en ce que la paroi mobile de récipient (38) est du type conique et en ce que l'arrivée (15) ainsi que la sortie (18) sont prévues dans cette paroi.

7. Dispositif selon la revendication 1, caractérisé en ce que le récipient (10, 37) s'élargit dans la direction de mouvement de la paroi mobile de récipient (24, 38).

8. Dispositif selon la revendication 1, caractérisé en ce que la paroi mobile de récipient (24, 38) présente un guide (26).

0 114 564

Fig.1

## Fig. 2